# EUROPEAN PATENT SPECIFICATION

(11) **EP 3 726 371 B1**
(45) Date of publication and mention of the grant of the patent: **18.09.2024**
(21) Application number: 20151271.2
(22) Date of filing: 10.01.2020
(51) Int. Cl.: G06F 3/16

(54) **METHOD FOR PROCESSING MULTI-MEDIA SIGNALS AND ASSOCIATED MULTI-MEDIA DEVICE**
VERFAHREN ZUR VERARBEITUNG VON MULTIMEDIASIGNALEN UND ZUGEHÖRIGE MULTIMEDIAVORRICHTUNG
PROCÉDÉ DE TRAITEMENT DE SIGNAUX MULTIMÉDIA ET DISPOSITIF MULTIMÉDIA ASSOCIÉ

(30) Priority: 16.04.2019 TW 108113180
(43) Date of publication of application: 21.10.2020
(73) Proprietor: Realtek Semiconductor Corp., 30076 HsinChu (TW)
(72) Inventor: Lai, Chao-Min, 300 Hsinchu City (TW); Wu, Chia-Hao, 300 Hsinchu City (TW); Chen, Yan-Jyun, 516 Changhua County (TW); Luo, Guo-Yuan, 730 Tainan City (TW)
(74) Representative: Straus, Alexander

(56) References cited:
- WO-A1-2017/101361
- CN-U- 203 399 275
- CN-U- 207 731 651
- US-A1- 2017 055 034
- US-A1- 2017 161 227
- BAMBINO ROGER: "The 7 best USB-C headphones for 2019 -", 29 March 2019 (2019-03-29), pages 1 - 6, XP055914738, Retrieved from the Internet <URL:https://web.archive.org/web/20190401021027/https://techjaja.com/the-7-best-usb-c-headphones-for-2019/> [retrieved on 20220422]

## Description

### Field of the Invention

The present invention is related to a method for processing a multi-media signal and an associated multi-media device according to the pre-characterizing clauses of claims 1 and 5.

### Background of the Invention

High Definition Multimedia Interface (HDMI) Licensing Administrator, Inc. (HDMI LA) specifies an Audio Return Channel (ARC) which allows audio signals to be transmitted in different directions. As transmission speed of signals reaches 12 Giga bits per second in the HDMI 2.1 specification, a length of HDMI cable is severely limited (e.g. 2-3 meters at most) under a condition of not introducing signal errors, which greatly limits locations of a projector (or TV) and an amplifier. Thus, there is a need for a novel multi-media signal processing method and associated multi-media device to solve the problem of limited cable length.

### Summary of the Invention

This in mind, the application aims at providing a method for processing a multi-media signal and an associated multi-media device, which can prevent locations of a projector (or TV) and an amplifier from being limited by the length of an HDMI cable in order to improve user experience.

This is achieved by a method for processing a multi-media signal according to claim 1 and a multi-media device according to claim 5. The dependent claims pertain to corresponding further developments and improvements.

As will be seen more clearly from the detailed description following below, the claimed method comprises: receiving, by a High Definition Multimedia Interface of a multi-media device, a first audio signal within the multi-media signal from a display device through an Audio Return Channel (ARC) or an enhanced ARC, the first audio signal being of a first transmission format suitable to be transmitted by the High Definition Multimedia Interface; within the multi-media device, converting the first audio signal into a second audio signal applicable to a Universal Serial Bus, hereafter USB, interface, the second audio signal being of a second transmission format suitable to be transmitted by the USB interface and being different from the first transmission format; and outputting the second audio signal from the multi-media device to an audio device through the USB interface for playback; wherein the multi-media device obtains power from a power management circuit within the audio device through at least one cable connecting the USB interface to the audio device, and wherein the power management circuit also supplies power internally to the audio device.

In addition, the claimed multi-media device comprises a High Definition Multimedia Interface, a Universal Serial Bus, hereafter USB, interface and a system chip, wherein the system chip comprises a conversion circuit coupled between the High Definition Multimedia interface and the USB interface. In operations of the multi-media device, the High Definition Multimedia interface is configured to receive a first audio signal within a multi-media signal from a display device through an Audio Return Channel (ARC) or an enhanced ARC, the first audio signal being of a first transmission format suitable to be transmitted by the High Definition Multimedia Interface, and the USB interface is configured to output a second audio signal from the multi-media device to an audio device for playback, wherein the audio device comprises a power management circuit, configured to perform power management, wherein the multi-media device obtains power from the power management circuit through at least one cable connecting the USB interface to the audio device, wherein the power management circuit also supplies power internally to the audio device. In addition, the system chip may utilize the conversion circuit to convert the first audio signal into the second audio signal applicable to the USB interface, the second audio signal being of a second transmission format suitable to be transmitted by the USB interface and being different from the first transmission format.

The multi-media device of the present invention converts the first audio signal into the second audio signal, where a transmission length of the second audio signal is less likely to be limited by the length of HDMI cable. For example, the second transmission interface is implemented by a Universal Serial Bus (USB) interface in order to solve the related art problems of using HDMI cables. In addition, embodiments of the present invention will not greatly increase costs, so the present invention can solve the problem of the related art without introducing any side effect or in a way that is less likely to introduce side effects.

### Brief Description of the Drawings

In the following, the invention is further illustrated by way of example, taking reference to the accompanying drawings. Thereof:
FIG. 1 is a diagram illustrating a video system according to an embodiment of the present invention;
FIG. 2 is a diagram illustrating a video system according to an embodiment of the present invention; and
FIG. 3 is a flowchart illustrating a method for processing a multi-media signal according to an embodiment of the present invention.

### Detailed Description

At least one embodiment of the present invention provides a multi-media device. The multi-media device may utilize a video decoding circuit therein to perform video decoding to generate video output signals, and transmit the aforementioned video output signals to at least one video output device (e.g. digital TV, projector) through at least one High Definition Multimedia Interface (HDMI) cable. General digital TV performance has undergone recent improvements. For example, smart TVs can execute some video application programs (e.g. YouTube, Google Play and Netflix) which support high level audio specifications (e.g. Dolby Digital and Digital Theater System (DTS)). The multi-media device can support signal processing during execution of these video application programs, in order to allow users to enjoy the experience of using audio output equipment coupled to the multi-media device (e.g. audio output of the audio output equipment).

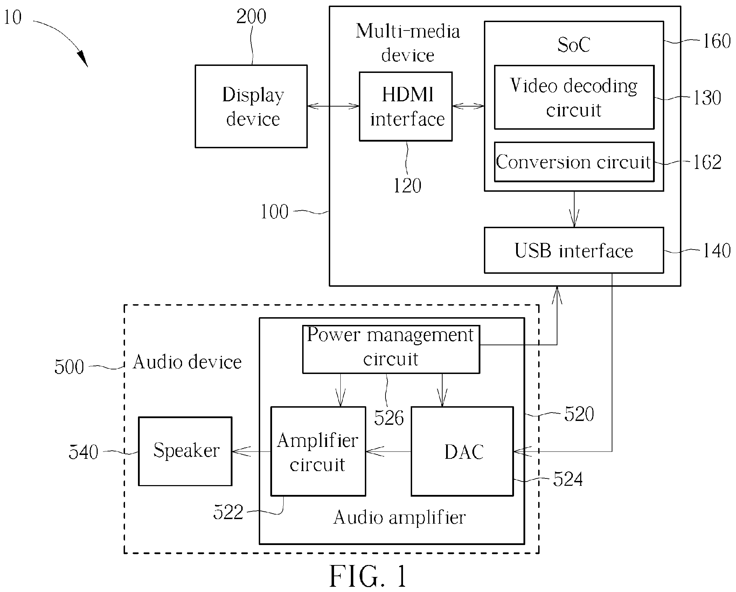

FIG. 1 is a diagram illustrating a video system 10 according to an embodiment of the present invention. The video system 10 comprises a multi-media device 100, a display device 200 and an audio device 500, where examples of the display device 200 include, but are not limited to: a display device without the function of executing the video application programs (such as a projector or a conventional TV), and a display device with the function of executing the video application programs (such as a smart TV); and examples of the audio device 500 include, but are not limited to: an audio device integrating a speaker and an amplifier into a single device, and an audio system constituted by connecting a speaker and an amplifier. In some embodiments, the multi-media device 100 is implemented in small sized multi-media devices such as an Over The Top (OTT) box and a TV stick.

In this embodiment, the multi-media device 100 comprises a first transmission interface such as an HDMI interface 120, a video decoding circuit 130, a second transmission interface such as a Universal Serial Bus (USB) interface 140, and a system chip such as a System on a Chip (SoC) 160, where the SoC 160 comprises a conversion circuit 162 coupled between the HDMI interface 120 and the USB interface 140. The HDMI interface 120 allows the multi-media device 100 to be coupled to the display device 200 through an HDMI cable, and the USB interface 140 allows the multi-media 100 to be coupled to the audio device 500 through at least one USB cable (e.g. a USB type-C cable). In some embodiments, in addition to the conversion circuit 162, the SoC 160 may further comprises one or more processing circuits (not shown) for executing various types of video application programs (e.g. YouTube, Google Play, Netflix).

In this embodiment, the audio device 500 comprises an audio amplifier 520 and a speaker 540 (e.g. a passive speaker) coupled to the audio amplifier, where the audio amplifier 520 comprises an amplifier circuit 522, a digital-to-analog converter (DAC) 524 coupled to the amplifier circuit 522, and a power management circuit 526 respectively coupled to the amplifier circuit 522 and the DAC 524. In this embodiment, the DAC 524 obtains a digital audio signal from the multi-media device 100 through the aforementioned at least one USB cable, and performs digital-to-analog conversion on the digital audio signal to output an analog audio signal; and then the amplifier circuit 522 amplifies the analog audio signal to drive the speaker 540 with the analog audio signal for playback. In this embodiment, the power management circuit 526 provides the amplifier circuit 522 and the DAC 524 with power, and also provides the multi-media device 100 (such as the HDMI interface 120, the USB interface 140 and the SoC 160 therein) with power through the aforementioned at least one USB cable. Thus, the present invention provides a design of separated power sources, which makes the multi-media device 100 able to obtain power from the power management circuit 526 within the audio device 500 through at least one USB cable connecting the USB interface 140 to the audio device 500, to thereby allow the multi-media device 100 to normally operate without any built-in power management circuit, and required hardware size can be reduced.

In this embodiment, both the multi-media device 100 and the display device 200 have a function of obtaining streaming data (e.g. streaming data comprising image data and audio data) from a data streaming source. For better comprehension, the following description takes a smart TV as an example of the display device 200. When the display device 200 operates in an ordinary mode, the aforementioned streaming data is obtained from the data streaming source (e.g. a remote server or internet connected to the remote server) through the multi-media device 100 rather than through the display device 200, where the SoC 160 utilizes the video decoding circuit 130 to perform video decoding. In addition, the multi-media device 100 utilizes the HDMI interface 120 to transmit the image data within the streaming data to the display device 200 for display and utilizes the USB interface 140 to transmit the audio data within the streaming data to the audio device 500 for playback. When the display device 200 operates in an internet mode, the aforementioned streaming data is obtained from the data streaming source (e.g. a remote server or internet connected to the remote server) through the display device 200 rather than through the multi-media device 100, where the SoC 160 receives a first audio signal within a multi-media signal from the display device 200 through an Audio Return Channel (ARC) or an enhanced ARC (eARC) (e.g. the first audio signal carries the audio data within the streaming data obtained by the display device 200), and then the SoC 160 utilizes the conversion circuit 162 therein to convert the first audio signal into a second audio signal applicable to the USB interface 140, and outputs the second audio signal to the audio device 500 through the USB interface 140 for playback.

In some embodiments, the conversion circuit 162 comprises a decoder (not shown) to make the multi-media 100 able to process compressed audio data in addition to uncompressed audio data. For example, when the first audio signal (e.g. the audio data within the streaming data obtained by the display device 200 is audio data having Dolby Digital or Digital Theater System (DTS) format), the decoder within the conversion circuit 162 decodes (decompresses) the audio data first, and then converts the decoded data into a USB signal format for being outputted by the USB interface 140; in another example, when the first audio signal is uncompressed audio data, the conversion circuit 162 skips the aforementioned decoding step and directly converts the uncompressed data into a USB signal format for being outputted by the USB interface 140.

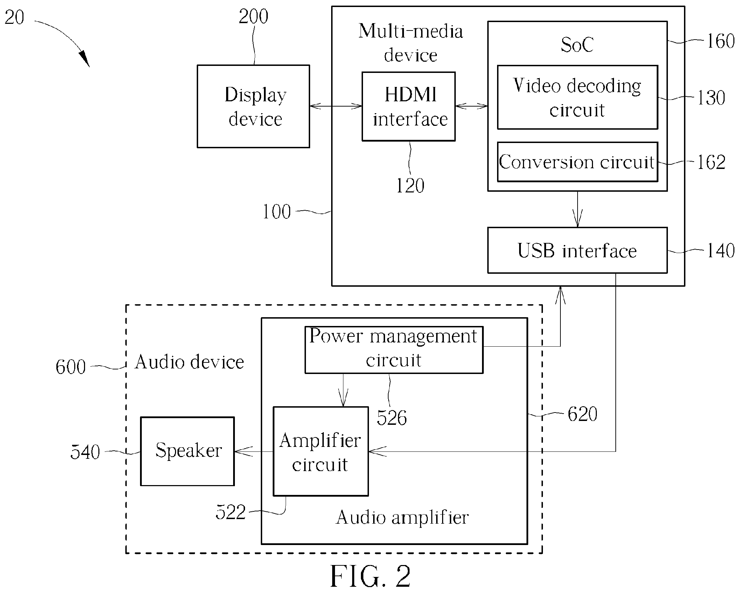

FIG. 2 is a diagram illustrating a video system 20 according to an embodiment of the present invention, where the USB interface 140 within the multi-media device 100 comprises a USB type-C interface. A difference between this embodiment and the embodiment shown in FIG. 1 is that the audio device 600 connected to the multi-media device 100 does not comprise the DAC 524, and the audio device 600 is implemented by merely utilizing the power management circuit 526, the amplifier circuit 522 (e.g. a class-D amplifier) and the speaker 540. In comparison with the audio device 500, an audio signal received by the audio device 600 is an analog audio signal rather than a digital signal. In this embodiment, the USB interface 140 determines whether the audio device 600 is an audio device without any DAC (e.g. a passive audio device) by detecting a set of input resistors (e.g. a set of resistors of configuration channel (CC) pins) of the audio device 600 (amplifier circuit), e.g. by detecting voltage levels corresponding to resistances of the set of resistors; wherein when the audio device 600 is an audio device without any DAC, the USB interface 140 operates in an audio adapter accessory mode, and outputs an analog audio signal to the audio device 600 for playback. For example, when the multi-media device 100 (such as the SoC 160 and the USB interface 140 therein) operates in the audio adapter accessory mode, the conversion circuit 162 utilizes a DAC therein (not shown) to convert the audio signal received from the display device 200 into an analog audio signal, and further transmit the analog audio signal to the audio device 600 through the USB interface 140 for playback.

In practice, based on the limitation of a length of HDMI cable, the multi-media device 100 is usually arranged at a position near the display device 200. According to user experience, an audio device may need to be arranged at a position having a specific distance from the display device 200 (or the multi-media device 100). In the related art, an audio signal from the display device 200 may be transmitted by optical fibers to overcome the limitation of the length of HDMI cable, but equipment for optical fiber transmission is usually expensive. In comparison with the related art, based on the USB interface 140 within the multi-media device 100 of the present invention, a plurality of cables can be connected in series to connect the USB interface 140 to the audio device (e.g. the audio device 500 shown in FIG. 1) through at least one hub to increase a transmission distance of an audio signal (such as the aforementioned second audio signal) between the multi-media device 100 and the audio device (e.g. the audio device 500 shown in FIG. 1). For example, when a single USB cable is not long enough to satisfy requirements of the video system established by a user, the user may utilize a hub to connect two USB cables (or utilize two or more hubs to connect three or more USB cables) to increase the transmission distance of the audio signal, but the present invention is not limited thereto.

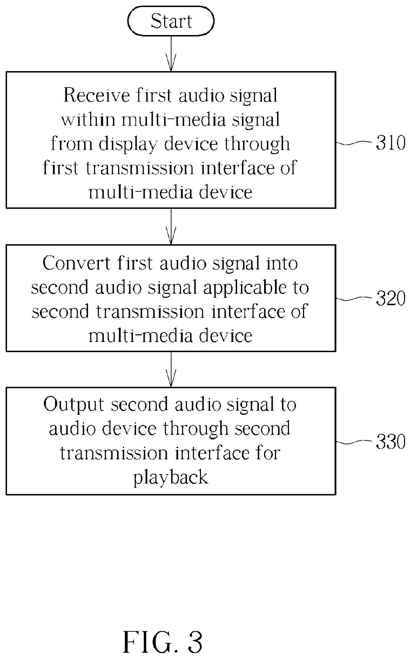

FIG. 3 is a flowchart illustrating a method for processing a multi-media signal (e.g. the streaming data obtained by the display device 200 from a data streaming source in the aforementioned embodiment) according to an embodiment of the present invention. For better comprehension, please refer to FIG. 3 in conjunction with FIG. 1 and FIG. 2.

In Step 310, a first transmission interface such as the HDMI interface 120 of the multi-media device 100 receives a first audio signal within the multi-media signal from the display device 200. More specifically, the HDNI interface 120 may utilize an ARC or an eARC to receive the first audio signal.

In Step 320, the multi-media device 100 (more particularly, the conversion circuit 162 within the SoC 160) converts the first audio signal into a second audio signal applicable to a second transmission interface such as the USB interface 140 of the multi-media device 100.

In Step 330, the multi-media device 100 may output the second audio signal to an audio device through the second transmission interface for playback. Note that, when the multi-media device 100 is coupled to the audio device 500 (as shown in FIG. 1), the second audio signal comprises a digital audio signal; and when the multi-media device 100 is coupled to the audio device 600 (as shown in FIG. 2), the multi-media 100 (e.g. the USB interface 140) operates in an audio adapter accessory mode to make the second audio signal comprise an analog audio signal.

Briefly summarized, the method and the multi-media device of the present invention can solve the problems caused by insufficient length of an HDMI cable by converting an audio signal received by the HDMI interface 120 into another audio signal for being outputted by the USB interface 140. In addition, the USB interface 140 is not only for transmitting audio signals, but also for obtaining power from the audio device. According to this power separated design, the size of the multi-media device can be reduced. As mentioned above, the present invention can improve user experience and solve the problem of the related art without introducing any side effect or in a way that is less likely to introduce side effects.

## Claims

1. A method for processing a multi-media signal, comprising:
Receiving, by a High Definition Multimedia Interface (120) of a multi-media device (100), a first audio signal within the multi-media signal from a display device (200) through an Audio Return Channel, ARC, or an enhanced ARC, the first audio signal being of a first transmission format suitable to be transmitted by the High Definition Multimedia Interface (120);
within the multi-media device (100), converting the first audio signal into a second audio signal applicable to a Universal Serial Bus, hereafter USB, interface (140), the second audio signal being of a second transmission format suitable to be transmitted by the USB interface and being different from the first transmission format; and
outputting the second audio signal from the multi-media device (100) to an audio device (500, 600) through the USB interface (140) for playback;
wherein the multi-media device (100) obtains power from a power management circuit (526) within the audio device (500, 600) through at least one cable connecting the USB interface (140) to the audio device (500, 600), and wherein the power management circuit (526) also supplies power internally to the audio device (500, 600).

2. The method of claim 1, further comprising:
connecting a plurality of cables in series to connect the USB interface (140) to the audio device (500, 600) through at least one hub, to increase a transmission distance of the second audio signal between the multi-media device (100) and the audio device (500, 600).

3. The method of claim 1, wherein the USB interface (140) comprises a USB type-C interface, and the method further comprises:
in an audio adapter accessory mode of the USB type-C interface, outputting the second audio signal to the audio device (600) through the USB type-C interface for playback, wherein the second audio signal comprises an analog audio signal.

4. The method of claim 1, wherein each of the multi-media device (100) and the display device (200) has a function of obtaining streaming data from a data streaming source; and in response to the streaming data being obtained from the data streaming source through the display device (200) rather than through the multi-media device (100), the multi-media device (100) obtains audio data within the streaming data from the display device (200), wherein the first audio signal carries the audio data.

5. A multi-media device (100), comprising:
a High Definition Multimedia Interface (120), configured to receive a first audio signal within a multi-media signal from a display device (200) through an Audio Return Channel, ARC, or an enhanced ARC, the first audio signal being of a first transmission format suitable to be transmitted by the High Definition Multimedia Interface (120);
a Universal Serial Bus, hereafter USB, interface (140), configured to output a second audio signal from the multi-media device (100) to an audio device (500, 600) for playback, wherein the audio device (500, 600) comprises a power management circuit (526), configured to perform power management, wherein the multi-media device (100) obtains power from the power management circuit (526) through at least one cable connecting the USB interface (140) to the audio device (500, 600), wherein the power management circuit (526) also supplies power internally to the audio device (500, 600); and
a system chip (160), comprising a conversion circuit (162) coupled between the High Definition Multimedia Interface (120) and the USB interface (140), wherein the system chip (160) utilizes the conversion circuit (162) to convert the first audio signal into the second audio signal applicable to the USB interface (140), the second audio signal being of a second transmission format suitable to be transmitted by the USB interface (140) and being different from the first transmission format.

6. The multi-media device (100) of claim 5, wherein at least one hub connects a plurality of cables in series to connect the USB interface (140) to the audio device (500, 600), to increase a transmission distance of the second audio signal between the multi-media device (100) and the audio device (500, 600).

7. The multi-media device (100) of claim 5, wherein the 5 USB interface (140) comprises a USB type-C interface, and in an audio adapter accessory mode of the USB type-C interface, the USB type-C interface outputs the second audio signal to the audio device (600) for playback, wherein the second audio signal comprises an analog audio signal.

8. The multi-media device (100) of claim 5, wherein each of the multi-media device (100) and the display device (200) has a function of obtaining streaming data from a data streaming source; and in response to the streaming data being obtained from the data streaming source through the display device (200) rather than through the multi-media device (100), the multi-media device (100) obtains audio data within the streaming data from the display device (200), wherein the first audio signal carries the audio data.

## Patentansprüche

1. Verfahren zur Verarbeitung eines Multimediasignals, welches umfasst:
Empfangen eines ersten Audiosignals innerhalb des Multimediasignals von einer Anzeigevorrichtung (200) über einen Audio-Rückkanal (ARC) oder einen erweiterten ARC durch eine *High-Definition*-Multimediaschnittstelle (120) eines Multimediageräts (100), wobei das erste Audiosignal ein erstes Übertragungsformat aufweist, das geeignet ist, von der *High*-*Definition*-Multimediaschnittstelle (120) übertragen zu werden;
Umwandeln des ersten Audiosignals in ein zweites Audiosignal, das für eine *Universal Serial Bus,* nachstehend USB-Schnittstelle (140), geeignet ist, innerhalb des Multimediageräts (100), wobei das zweite Audiosignal ein zweites Übertragungsformat aufweist, das für die Übertragung durch die USB-Schnittstelle geeignet ist und sich von dem ersten Übertragungsformat unterscheidet; und
Ausgeben des zweiten Audiosignals von dem Multimediagerät (100) an ein Audiogerät (500, 600) über die USB-Schnittstelle (140) zur Wiedergabe;
wobei das Multimediagerät (100) Strom von einer Stromverwaltungsschaltung (526) innerhalb des Audiogerätes (500, 600) über mindestens ein Kabel erhält, das die USB-Schnittstelle (140) mit dem Audiogerät (500, 600) verbindet, und wobei die Stromverwaltungsschaltung (526) auch intern Strom an das Audiogerät (500, 600) liefert.

2. Verfahren nach Anspruch 1, welches ferner umfasst:
Verbinden mehrerer Kabel in Reihe, um die USB-Schnittstelle (140) mit dem Audiogerät (500, 600) über mindestens ein Hub zu verbinden, um eine Übertragungsstrecke des zweiten Audiosignals zwischen dem Multimediagerät (100) und dem Audiogerät (500, 600) zu vergrößern.

3. Verfahren nach Anspruch 1, worin die USB-Schnittstelle (140) eine USB-Typ-C-Schnittstelle umfasst, und wobei das Verfahren ferner umfasst:
Ausgeben des zweiten Audiosignals in einem Audioadapter-Zusatzmodus der USB-Typ-C-Schnittstelle, an das Audiogerät (600) über die USB-Typ-C-Schnittstelle zur Wiedergabe, wobei das zweite Audiosignal ein analoges Audiosignal umfasst.

4. Verfahren nach Anspruch 1, wobei sowohl das Multimediagerät (100) als auch die Anzeigevorrichtung (200) eine Funktion zum Erhalten von Streaming-Daten von einer Daten-Streaming-Quelle hat; und als Reaktion darauf, dass die Streaming-Daten von der Daten-Streaming-Quelle durch die Anzeigevorrichtung (200) statt durch das Multimediagerät (100) erhalten werden, das Multimediagerät (100) Audiodaten innerhalb der Streaming-Daten von der Anzeigevorrichtung (200) erhält, wobei das erste Audiosignal die Audiodaten trägt.

5. Multimediagerät (100), welches umfasst:
eine *High*-*Definition*-Multimediaschnittstelle (120), die konfiguriert ist, ein erstes Audiosignal innerhalb eines Multimediasignals von einer Anzeigevorrichtung (200) über einen Audio-Rückkanal, ARC, oder einen erweiterten ARC zu empfangen, wobei das erste Audiosignal ein erstes Übertragungsformat aufweist, das geeignet ist, von der *High*-*Definition*-Multimediaschnittstelle (120) übertragen zu werden;
eine *Universal Serial Bus*, nachstehend USB-Schnittstelle (140), die konfiguriert ist, ein zweites Audiosignal von dem Multimediagerät (100) an ein Audiogerät (500, 600) zur Wiedergabe auszugeben, wobei das Audiogerät (500, 600) eine Stromverwaltungsschaltung (526) umfasst, die konfiguriert ist, eine Energieverwaltung durchzuführen, wobei das Multimediagerät (100) über mindestens ein Kabel, das die USB-Schnittstelle (140) mit dem Audiogerät (500, 600) verbindet, Strom von der Stromverwaltungsschaltung (526) erhält, wobei die Stromverwaltungsschaltung (526) auch intern Strom an das Audiogerät (500, 600) liefert; und
einen Systemchip (160), der eine Umwandlungsschaltung (162) umfasst, die zwischen die *High*-*Definition*-Multimediaschnittstelle (120) und die USB-Schnittstelle (140) geschaltet ist, wobei der Systemchip (160) die Umwandlungsschaltung (162) verwendet, um das erste Audiosignal in das zweite Audiosignal umzuwandeln, das für die USB-Schnittstelle (140) anwendbar ist, wobei das zweite Audiosignal ein zweites Übertragungsformat aufweist, das geeignet ist, von der USB-Schnittstelle (140) übertragen zu werden, und das sich von dem ersten Übertragungsformat unterscheidet.

6. Multimediagerät (100) nach Anspruch 5, worin mindestens ein Hub mehrere Kabel in Reihe schaltet, um die USB-Schnittstelle (140) mit dem Audiogerät (500, 600) zu verbinden, um eine Übertragungsstrecke des zweiten Audiosignals zwischen dem Multimediagerät (100) und dem Audiogerät (500, 600) zu vergrößern.

7. Multimediagerät (100) nach Anspruch 5, worin die USB-Schnittstelle (140) eine USB-Typ-C-Schnittstelle umfasst, und in einem Audioadapter-Zusatzmodus der USB-Typ-C-Schnittstelle die USB-Typ-C-Schnittstelle das zweite Audiosignal an das Audiogerät (600) zur Wiedergabe ausgibt, wobei das zweite Audiosignal ein analoges Audiosignal umfasst.

8. Multimediagerät (100) nach Anspruch 5, worin sowohl das Multimediagerät (100) als auch die Anzeigevorrichtung (200) die Funktion aufweisen, Streaming-Daten von einer Daten-Streaming-Quelle zu erhalten; und als Reaktion darauf, dass die Streaming-Daten von der Daten-Streaming-Quelle durch die Anzeigevorrichtung (200) anstatt durch das Multimediagerät (100) erhalten werden, das Multimediagerät (100) Audiodaten innerhalb der Streaming-Daten von der Anzeigevorrichtung (200) erhält, wobei das erste Audiosignal die Audiodaten trägt.

## Revendications

1. Méthode de traitement d'un signal multimédia, comprenant:
recevoir, par une interface multimédia haute définition (120) d'un dispositif multimédia (100), un premier signal audio dans le signal multimédia provenant d'un dispositif d'affichage (200) via un canal de retour audio (ARC) ou un ARC amélioré, le premier signal audio étant d'un premier format de transmission approprié pour être transmis par l'interface multimédia haute définition (120);
convertir le premier signal audio en un second signal audio applicable à une interface USB (140) à l'intérieur du dispositif multimédia (100), le second signal audio étant d'un second format de transmission pouvant être transmis par l'interface USB et étant différent du premier format de transmission; et
sortir le deuxième signal audio du dispositif multimédia (100) vers un dispositif audio (500, 600) par l'intermédiaire de l'interface USB (140) pour la lecture;
dans lequel le dispositif multimédia (100) est alimenté par un circuit de gestion de l'énergie (526) à l'intérieur du dispositif audio (500, 600) par l'intermédiaire d'au moins un câble reliant l'interface USB (140) au dispositif audio (500, 600), et dans lequel le circuit de gestion de l'énergie (526) alimente également le dispositif audio (500, 600) de manière interne.

2. Méthode de la revendication 1, comprenant en outre:
connecter plusieurs câbles en série pour relier l'interface USB (140) au dispositif audio (500, 600) par l'intermédiaire d'au moins un concentrateur, afin d'augmenter la distance de transmission du second signal audio entre le dispositif multimédia (100) et le dispositif audio (500, 600).

3. Méthode de la revendication 1, dans laquelle l'interface USB (140) comprend une interface USB type-C, et la méthode comprend en outre:
sortir le deuxième signal audio vers le dispositif audio (600) via l'interface USB de type-C pour la lecture dans un mode accessoire d'adaptateur audio de l'interface USB de type-C, dans lequel le deuxième signal audio comprend un signal audio analogique.

4. Méthode de la revendication 1, dans laquelle le dispositif multimédia (100) et le dispositif d'affichage (200) ont tous deux pour fonction d'obtenir des données en continu à partir d'une source de données en continu; et en réponse à l'obtention des données en continu à partir de la source de données en continu par le dispositif d'affichage (200) plutôt que par le dispositif multimédia (100), le dispositif multimédia (100) obtient des données audio dans les données en continu à partir du dispositif d'affichage (200), dans lequel le premier signal audio transporte les données audio.

5. Dispositif multimédia (100), comprenant:
une interface multimédia haute définition (120), configurée pour recevoir un premier signal audio dans un signal multimédia provenant d'un dispositif d'affichage (200) par l'intermédiaire d'un canal de retour audio (ARC) ou d'un ARC amélioré, le premier signal audio étant d'un premier format de transmission adapté pour être transmis par l'interface multimédia haute définition (120);
une interface USB (Universal Serial Bus) (140), configurée pour émettre un second signal audio du dispositif multimédia (100) vers un dispositif audio (500, 600) pour la lecture, le dispositif audio (500, 600) comprenant un circuit de gestion de l'énergie (526), configuré pour effectuer la gestion de l'énergie, dans lequel le dispositif multimédia (100) est alimenté par le circuit de gestion de l'énergie (526) via au moins un câble reliant l'interface USB (140) au dispositif audio (500, 600), dans lequel le circuit de gestion de l'énergie (526) fournit également une alimentation interne au dispositif audio (500, 600); et
une puce système (160), comprenant un circuit de conversion (162) couplé entre l'interface multimédia haute définition (120) et l'interface USB (140), dans laquelle la puce système (160) utilise le circuit de conversion (162) pour convertir le premier signal audio en un second signal audio applicable à l'interface USB (140), le second signal audio étant d'un second format de transmission approprié pour être transmis par l'interface USB (140) et étant différent du premier format de transmission.

6. Dispositif multimédia (100) de la revendication 5, dans lequel au moins un concentrateur connecte une pluralité de câbles en série pour connecter l'interface USB (140) au dispositif audio (500, 600), afin d'augmenter la distance de transmission du second signal audio entre le dispositif multimédia (100) et le dispositif audio (500, 600).

7. Dispositif multimédia (100) de la revendication 5, dans lequel l'interface USB (140) comprend une interface USB de type C, et dans un mode accessoire d'adaptateur audio de l'interface USB de type C, l'interface USB de type C émet le deuxième signal audio vers le dispositif audio (600) pour la lecture, dans lequel le deuxième signal audio comprend un signal audio analogique.

8. Dispositif multimédia (100) de la revendication 5, dans lequel le dispositif multimédia (100) et le dispositif d'affichage (200) ont tous deux pour fonction d'obtenir des données en continu à partir d'une source de données en continu; et en réponse à l'obtention des données en continu à partir de la source de données en continu par le dispositif d'affichage (200) plutôt que par le dispositif multimédia (100), le dispositif multimédia (100) obtient des données audio dans les données en continu à partir du dispositif d'affichage (200), dans lequel le premier signal audio transmet les données audio.
